(19) Europäisches Patentamt
European Patent Office
Office européen des brevets

(11) Veröffentlichungsnummer : **0 481 345 B1**

(12) **EUROPÄISCHE PATENTSCHRIFT**

(45) Veröffentlichungstag der Patentschrift : **03.08.94 Patentblatt 94/31**

(51) Int. Cl.$^5$ : **C09D 163/00,** C08G 59/16, C08G 59/40

(21) Anmeldenummer : **91117221.1**

(22) Anmeldetag : **09.10.91**

# (54) Flüssiges Beschichtungsmittel.

(30) Priorität : **16.10.90 DE 4032751**

(43) Veröffentlichungstag der Anmeldung : **22.04.92 Patentblatt 92/17**

(45) Bekanntmachung des Hinweises auf die Patenterteilung : **03.08.94 Patentblatt 94/31**

(84) Benannte Vertragsstaaten : **AT BE CH DE DK ES FR GB GR IT LI NL SE**

(56) Entgegenhaltungen :
**EP-A- 0 199 087**
**DE-A- 2 621 423**

(73) Patentinhaber : **HOECHST AKTIENGESELLSCHAFT**
**D-65926 Frankfurt (DE)**

(72) Erfinder : **Brindöpke, Gerhard, Dr. Dipl.-Chem.**
**Kaiser-Konrad-Weg 26**
**W-6231 Sulzbach/Ts. (DE)**
Erfinder : **Kubillus, Uwe, Dr. Dipl.-Chem.**
**Scharper Strasse 11**
**W-6200 Wiesbaden (DE)**
Erfinder : **Plum, Helmut, Dr. Dipl.-Chem.**
**Nibelungenstrasse 3**
**W--6204 Taunusstein (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Aus EP-0 199 087 und US 3,668,183 sind bereits Beschichtungsmittel bekannt, die als Bindemittelkomponente ein Acetoacetat-Gruppen enthaltendes Polymer und als Vernetzer ein Polyamin in Form des entsprechenden Aldimins oder Ketimins enthalten. Bei der Aushärtung dieser Zwei-Komponenten Systeme reagieren die Acetoacetat-Gruppen mit den Polyaminen unter Bildung von Enamin-Gruppen (Journal of Paint Technology, Vol. 46, No. 591, S. 70 - 76 und S. 76 - 81). Als Acetoacetat-Gruppen enthaltende Polymere sind solche bekannt, denen Polyole, Polythiole oder Polyamine zugrunde liegen (US 3 668 183). Die in EP 199 087 beschriebenen Acetoacetat-Gruppen enthaltenden Polymere sind solche, die durch Additionspolymerisation von ungesättigten Monomeren erhalten werden, wobei mindestens ein Monomer eine Hydroxylgruppe enthält. Diese Hydroxylgruppe in dem fertigen Polymer wird dann in die Acetoacetat-Gruppe überführt.

Gegenstand der vorliegenden Erfindung sind flüssige Beschichtungsmittel auf der Basis eines Acetoacetat-Gruppen enthaltenden Polymers und eines Polyamins in Form des entsprechenden Aldimins oder Ketimins, wobei das Acetoacetat-Gruppen enthaltende Polymer durch Umsetzung eines Polyepoxids mit Wasser, einem Amin oder einer Hydroxicarbonsäure und anschließende Veresterung oder Umesterung mit Acetessigsäurederivaten erhalten wird.

Beispiele für geeignete Epoxide sind Mono- und/oder Polyepoxide. Diese Epoxidverbindungen können dabei sowohl gesättigt als auch ungesättigt sowie aliphatisch, cycloaliphatisch, aromatisch oder heterocyclisch sein und Hydroxylgruppen aufweisen. Sie können weiterhin solche Substituenten enthalten, die unter den Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen (Epoxidharze) liegen zwischen 100 und 2000, vorzugsweise zwischen 160 und 1500. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-ethan, Bis-(4-hydroxyphenyl)-1,1-isobutan, Bis-(4-hydroxy-tert.-butylphenyl)-2,2-propan, Bis-(2-hydroxynapthyl)-methan, 1,5-Dihydroxynaphthalin, Tris-(4-hydroxyphenyl)-methan, Bis-(4-hydroxyphenyl)ether, Bis-(4-hydroxyphenyl)sulfon u.a. sowie die Chlorierungs- und Bromierungsprodukte der vorstehend genannten Verbindungen. Bisphenol A und Bisphenol F sind hierbei besonders bevorzugt.

Auch die Polyglycidylether von mehrwertigen Alkoholen sind geeignet. Als Beispiele derartiger mehrwertiger Alkohole seien Ethylenglykol, Diethylenglykol, Triethylenglykol, 1,2-Propylenglykol, Polyoxypropylenglykole (n = 1-10), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure erhält. Beispiele sind Adipinsäurediglycidylester, Phthalsäurediglycidylester und Hexahydrophthalsäurediglycidylester.

Diese Polyepoxidverbindungen können auch in Mischung untereinander sowie ggf. auch in Mischung mit Monoepoxiden eingesetzt werden. Als Monoepoxide sind beispielsweise geeignet: epoxidierte einfach-ungesättigte Kohlenwasserstoffe (Butylen-, Cyclohexen-, Styroloxid), halogenhaltige Epoxide, wie z.B. Epichlorhydrin; Epoxidether einwertiger Alkohole (Methyl-, Ethyl-, Butyl-, 2-Ethylhexyl-, Dodecylalkohol); Epoxidether einwertiger Phenole (Phenol, Kresol sowie andere in o- oder p-Stellung substituierte Phenole); und Gylcidylester gesättigter und ungesättigter Carbonsäuren.

Des weiteren sind amid- oder urethangruppenhaltige Epoxide für die Umsetzung geeignet, z.B. Triglycidylisocyanurat oder glycidolverkapptes Hexamethylendiisocyanat.

Weitere geeignete Epoxidverbindungen leiten sich von ungesättigten Fettsäuren, beispielsweise von Linolsäuren oder Linolensäuren ab. Geeignete epoxidierte Fettsäurederivate sind z.B. solche von Leinöl, Sojaöl, Alkylestern der Ricinen-, Sojaöl, Linol-Fettsäure, Öl- oder Arachidonsäure, oligomeren Fettsäuren und deren Estern, ferner kommen epoxidierte mehrwertige Alkylester in Frage. Bevorzugt sind epoxidiertes Leinöl und Sojaöl.

Mischungen der genannten Epoxide können ebenfalls eingesetzt werden.

Eine ausführliche Aufzählung der geeigneten Epoxidverbindungen findet sich in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Chapter 2 und Wagner/Sarx, "Lackkunstharze", Carl Hanser Verlag (1971), S. 174 ff.

Statt der Polyepoxidverbindung lassen sich auch deren Umsetzungsprodukte mit $CO_2$ einsetzen. Diese Produkte enthalten neben Epoxidgruppen noch 1,3-Dioxolan-2-on Gruppen (cyclische Carbonatgruppen), die mit primären Aminen unter Ausbildung von Urethanen umgesetzt werden können. Je nach den Molverhältnissen von Polyepoxidverbindung und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen, siehe hierzu die DE-Patentanmeldungen P 36 44 372.7 und P 36 44 373.5.

Die Polyepoxidverbindungen oder die cyclische Carbonatgruppen enthaltenden Verbindungen können als solche eingesetzt werden; jedoch ist es häufig vorteilhaft, einen Teil der reaktionsfähigen Epoxidgruppen/cycl. Carbonatgruppen mit einem modifizierenden Material umzusetzen, um die Filmeigenschaften zu verbessern.

Besonders bevorzugt sind plastifizierte Epoxidharze mit endständigen Epoxygruppen, die durch Teilumsetzung der Epoxygruppen von mindestens zwei Epoxygruppen enthaltenden Epoxidharzen mit OH- und COOH-haltigen Substanzen, wie mehrwertigen Alkoholen, z.B. den obengenannten Diolen, Polycarbonsäuren oder Carboxyl- oder OH-gruppenhaltigen Polyestern oder durch Umsetzung mit Polyaminen hergestellt werden.

Als Epoxide im Sinne der vorliegenden Erfindung kommen auch Umsetzungsprodukte infrage aus Verbindungen mit mindestens zwei 1,2-Epoxidgruppen pro Molekül und Epoxidäquivalentengewichten von 160 bis 600 und aromatischen Dicarbonsäuren oder deren Mischungen mit Verbindungen aus der Gruppe (cyclo)aliphatische Dicarbonsäuren, Monocarbonsäuren und/oder einwertige Phenole, und gegebenenfalls cyclischen Anhydriden. Produkte dieser Art sind in EP-0 387 692 beschrieben, auf die hier verwiesen wird. Für die Herstellung dieser Umsetzungsprodukte kommen alle eingangs genannten Epoxyverbindungen in Frage.

Als aromatische Dicarbonsäuren werden z.B. verwendet: Terephthalsäure, Isophthalsäure, o-Phthalsäure oder verschiedene Naphthalin-dicarbonsäuren, beispielsweise 2,6-Naphthalindicarbonsäure. Besonders bevorzugt ist dabei Terephthalsäure. Es können auch Gemische der aromatischen Dicarbonsäuren eingesetzt werden.

Weitere geeignete aromatische Carbonsäuren sind solche des Typs

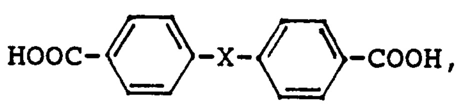

wobei X für eine chemische Bindung, für Alkylenreste mit 1 bis 6 C-Atomen, für O oder CO steht.

Der Begriff "(cyclo)aliphatische" Dicarbonsäuren soll entsprechende aliphatische oder cycloalipahtische Säuren sowie deren Gemische umfassen.

Als aliphatische Dicarbonsäuren, deren aliphatischer Rest im allgemeinen 1 bis 20, vorzugsweise 2 bis 12 C-Atome enthält, seien beispielsweise Bernsteinsäure, Glutarsäure, Adipinsäure, Korksäure, Azelainsäure, Sebacinsäure und Dodecandisäure genannt.

Geeignete cycloaliphatische Carbonsäuren, deren cycloaliphatischer Rest zumeist 5 bis 12, vorzugsweise 6 bis 8 C-Atome umfaßt, sind z.B. die verschiedenen Cyclohexandicarbonsäure-Isomeren, Hexahydrophthalsäure und Tetrahydrophthalsäure.

Geeignete Monocarbonsäuren, deren C-Zahl im allgemeinen 3 bis 20, vorzugsweise 3 bis 12 beträgt, sind z.B.: Benzoesäure, $\alpha$- bzw. $\beta$-Naphthoesäure, o,m,p-Toluolsäure, Anissäure, Veratrumsäure; weiterhin verzweigte oder unverzweigte aliphatische Monocarbonsäuren, wie z.B. Essigsäure, Propionsäure, Buttersäure, Laurinsäure, Stearinsäure, Isooctansäure, Isononansäure, oder Hydroxymonocarbonsäuren, wie Glycolsäure, Milchsäure, Dimethylolpropionsäure.

Die einwertigen Phenole können ein- oder mehrkernig sein. Beispielsweise seien hier genannt: Phenol, o,m,p-Kresol, Xylenole, Guajanol, Thymol, Carvacrol, $\alpha$- oder $\beta$-Napthol, p-Butylphenol udgl..

Falls die Säure-Komponente eine Mischung aus aromatischer Dicarbonsäure mit (cyclo)aliphatischen Dicarbonsäuren, Monocarbonsäuren und/oder aromatischen Alkoholen darstellt, so beträgt die Menge dieser neben der aromatisachen Dicarbonsäure vorhandenen Bestandteile zumeist 0,1 bis 20 Gew.-%, vorzugsweise 1 bis 5 Gew.-%, bezogen auf aromatische Dicarbonsäure.

Die Epoxy- und die Säure-Komponenten werden üblicherweise in solchen Mengen eingesetzt, daß das Äquivalentverhältnis Epoxid- zu Carboxylgruppen 6 : 5 bis 2 : 1, vorzugsweise 3 : 2 bis 2 : 1 beträgt. Bei Mitverwendung von cyclischen Anhydriden werden pro mol Reaktionsprodukt aus Epoxy- und Säure-Komponente

im allgemeinen 0,01-1 Mol, vorzugsweise 0,1-0,4 mol cyclisches Anhydrid verwendet.

Als cyclisches Polycarbonsäureanhydrid kommen zweckmäßigerweise solche in Frage, die 4 bis 20, vorzugsweise 4 bis 10 C-Atome aufweisen, und die gegebenenfalls noch Substituenten, wie Halogen, insbesondere Chlor, sowie Carboxylgruppen tragen können. Sie können sich von (cyclo)-aliphatischen, olefinisch ungesättigten oder aromatischen Polycarbonsäuren ableiten. Beispielsweise seien hier genannt: Bernsteinsäureanhydrid, Alkylenbernsteinsäureanhydride wie z.B. Dodecenylbernsteinsäureanhydrid, Glutarsäureanhydrid, Maleinsäureanhydrid oder Citraconsäureanhydrid.

Das Molekulargewicht (Gewichtsmittel) sämtlicher Epoxide, die den erfindungsgemäßen Beschichtungsmitteln zugrunde liegen, bestimmt mittels Gelchromatographie (Polystyrolstandard), liegt üblicherweise im Bereich von etwa 300 bis etwa 50 000, vorzugsweise etwa 300 bis etwa 20 000.

Diese Epoxidverbindungen werden vor der Einfügung der Acetoacetat-Gruppen mit Wasser, mit Aminen oder mit Hydroxicarbonsäuren umgesetzt, sodaß ein weitgehend epoxidgruppenfreies Produkt entsteht. Diese Reaktion erfolgt bei Temperaturen im Bereich von 30 bis 140 °C in einem Lösemittel wie beispielsweise Xylol, Toluol, Limonen, Butanol, Diglykoldimethylether, Methoxypropanol, Butylacetat. Die jeweiligen Edukte werden im Falle der Amine in stöchiometrischen Mengenverhältnissen miteinander umgesetzt, so daß kein freier Amin übrig bleibt.

Folgende Amine können beispielsweise für die Reaktion mit den Epoxiden eingesetzt werden: $C_1$ bis $C_{10}$-Dialkylamine mit gleichen oder verschiedenen Alkylgruppen im Molekül wie Dimethyl-, Diethyl-, Diisopropyl-, Dibutylamin, Methylethyl-, Methylpropyl-, Methylbutylamin, monocycloaliphatische Amine wie Morpholin, Piperidin, Pyrrolidin und/oder Monoalkanolamine wie N-Methylamino-ethanol und/oder Dialkanolamine wie Diethanolamin, Diisopropanolamin.

Beispielhaft seien als geeignete Amine erwähnt: Ethylamin, n-Propylamin, Isopropylamin, n-Butylamin, sek. Butylamin, tert. Butylamin, n-Pentylamin, n-Hexylamin, $\alpha$-Methylbutylamin, n-Ethylpropylamin, Dimethylaminopropylamin, $\beta$-Ethylbutylamin, n-Methylbutylamin, Benzylamin und Cyclohexylamin, Benzylamin, Phenylethylamin, Hexylamin, Furfurylamin, Propylamin und tert.-Butylamin. Geeignete Hydroxyamine sind Monohydroxyamine, wie 2-Aminoethanol, 2-Aminopropanol, 3-Aminopropanol, 1-Amino-2-propanol, 2-Amino-3-pentanol und Polyhydroxymonoamine, wie 2-Amino-2-methyl-1,3-propandiol und 2-Amino-2-ethyl-1,3-propandiol.

Die auch möglichen Polyamine, insbesondere Diamine, können primäre und/oder sekundäre Aminogruppen enthalten. Beispiele für derartige Polyamine sind: Ethylendiamin, 1,2-Diaminopropan, 1,3-Diaminopropan, 1,3-Diaminobutan, 1,4-Diaminobutan, 1-Amino-3-methylaminopropan, 2-Methylpentamethylendiamin, Pentamethylendiamin, Hexamethylendiamin, Trimethylhexamethylendiamin, Neopentyldiamin, Octamethylendiamin, cycloaliphatische Diamine wie 1,2-, 1,3- oder 1,4-Cyclohexadiamin; 4,4'-Methylen-biscyclohexylamin, Isophorondiamin, 4,4'-Diamino-3,3'-dimethyl-dicyclohexylmethan, Xylylendiamin, Diethylentriamin und Bishexamethylentriamin. Besonders bevorzugt sind Isophorondiamin, Hexamethylendiamin, m-Xylylendiamin und Trimethylhexamethylendiamin. Es können auch Mischungen der Amine verwendet werden.

Die primären Amine und auch die Polyamine werden bevorzugt zur Kettenverlängerung und zum Molekulargewichtsaufbau mit linearen Diglycidylverbindungen umgesetzt; hierfür geeignete Diglycidylverbindungen sind z.B. die Diglycidylether, die sich vom Bisphenol A oder F ableiten oder die entsprechenden teilweise cyclische Carbonatgruppen enthaltenden Epoxidverbindungen. Die Umsetzung der Amine mit den Epoxiden wird bevorzugt so durchgeführt, daß die Umsetzung bezüglich der primären und sekundären Aminogruppen quantitativ erfolgt und daß überwiegend tertiäre Aminogruppen bzw. im Falle der cyclischen Carbonate Urethangruppen gebildet werden.

Folgende Hydroxicarbonsäuren können eingesetzt werden: Milchsäure, Äpfelsäure, Weinsäure, Dimethylolpropionsäure, Hydroxibenzoesäure, Hydroxycapronsäure, Glykolsäure.

Die anschließende Veresterung der Hydroxylgruppen des Epoxid-Aminadduktes bzw. Epoxid-Wasseradduktes zu Acetoacetaten erfolgt in der Regel durch Umsetzung mit monomeren Acetessigsäureestern wie z.B. Acetessigsäuremethyl-, -ethyl- oder -t-butylester. Der Veresterungsgrad der Hydroxylgruppen kann dabei in einem weiten Bereich, je nach gewünschten Eigenschaften des Endproduktes, verändert werden.

Die Umesterung erfolgt in der Art, daß man beide Komponenten miteinander zum Sieden erhitzt und dabei den sich bildenden tiefer siedenden Alkohol langsam, gegebenenfalls im Vakuum abdestilliert.

Bevorzugt wird man aus Kostengründen eine stöchiometrische und quantitative Umsetzung bezüglich der Acetessigestermenge anstreben.

Die Veresterung der Hydroxylgruppen kann aber auch mit Acetessigesteräquivalenten wie z.B. Diketen oder 2,2,6-Trimethyl-1,3-dioxin-4-on erfolgen.

Die Umsetzung erfolgt hierbei in Lösung oder in Substanz bei Temperaturen zwischen RT und 150 °C, wenn erforderlich kann auch noch ein zusätzlicher Katalysator verwendet werden.

Die so erhaltene Bindemittelkomponente in Form des Acetoacetat-Gruppen enthaltenden Polymers wird

mit einem Härter in Form eines blockierten Polyamins vermischt. Dabei beträgt das Molverhältnis von blockierten Polyaminen zu dem Acetoacetat-Gruppen enthaltenden Polymer 0,5 : 1,5, insbesondere 1 bis 1,5 :1.

Als Beispiele für typische Polyamine, die erfindungsgemäß in Form ihrer Aldimine oder Ketamine als zweite Komponente benutzt werden können, seien aliphatische, aromatische oder cycloaliphatische Amine mit 2 - 10 primären und/oder sekundären Aminogruppen, vorzugsweise 2 - 4 primären Aminogruppen und 2 - 200 Kohlenstoffatomen erwähnt.

Beispiele für geeignete Polyamine sind Ethylendiamin, Propylendiamin, Butylendiamin, Pentaethylendiamin, 2-Methylpentamethylendiamin, Trimethylhexamethylendiamin, Hexamethylendiamin, Decamethylendiamin, 4,7-Dioxadecan-1,10-diamin, Dodecamethylendiamin, 4,9-Dioxadodecan-1,12-diamin, 7-Methyl-4,10-dioxatridecan-1,13-diamin, 1,2-diaminocyclohexan, 1,4-Diaminocyclohexan, 4,4'-Diaminodicyclohexylmethan, Isophorondiamin, Bis(3-methyl-4-aminocyclohexyl)methan, 2,2-Bis(4-aminocyclohexyl)propan, Nitriltris(ethan-amin), Bis(3-aminopropyl)methylamin, 3-Amino-1-(methylamino)propan, 3-Amino-1-(cyclohexylamino)propan, N-(2-hydroxyethyl)ethylen-diamin und Polyamine der Formel $H_2N-(R_2-NH)_n-R_1-NH_2$, worin die Gruppe $R_1$ und die n Gruppen $R_2$ gleich sind oder verschieden und eine Alkylengruppe darstellen, die 2 - 6, vorzugsweise 2 - 4 Kohlenstoffatome enthält und n eine Zahl ist von 1 - 16, vorzugsweise von 1 - 3. Unter einer Alkylgruppe wird hier auch eine Cycloalkylgruppe oder eine ein Ethersauerstoffatom enthaltende Alkylgruppe verstanden. Beispiele für geeignete Polyalkylpolyamine sind Diethylentriamin, Dipropylentriamin, Dibutylentriamin und Bishexamethylentriamin. Diese Polyamine enthalten bevorzugt 5 - 15 Kohlenstoffatome.

Weitere geeignete erfindungsgemäße Polyamine sind die Addukte von Aminoverbindungen oder Polyaminen der oben beschriebenen Art an ein mehrwertiges Epoxid, Isocyanat, Maleinat, Fumarat oder an eine Acryloylverbindung bzw. Methacryloylverbindung.

Als Beispiele für geeignete Epoxyverbindungen, die fest oder flüssig sein können, seien die Di- oder Polyglycidylether der (Cyclo)aliphatischen oder aromatischen Hydroxylverbindungen genannt, wie Ethylenglykol, Glycerol, Cyclohexandiol (oder die Epoxide wie eingangs erwähnt), cycloaliphatische Epoxyverbindungen wie epoxidiertes Styrol oder Divinylbenzol, die anschließend hydriert sein können; Glycidylester von Fettsäuren, die beispielsweise 6 - 24 Kohlenstoffatome enthalten; Glycidyl(meth)acrylat; Epoxyverbindungen, die eine Isocyanuratgruppe enthalten; ein epoxidiertes Polyalkadien wie beispielsweise epoxidiertes Polybutadien; Hydantoin-Epoxyharze; Epoxyharze erhalten durch Epoxidierung aliphatischer und/oder cycloaliphatischer Alkene, wie beispielsweise Dipentendioxid, Dicyclopentadiendioxid und Vinylcyclohexendioxid, und Glycidylgruppen enthaltende Harze, beispielsweise Polyester oder Polyurethane, die ein oder mehrere Glycidylgruppen pro Molekül enthalten, oder Gemische der oben dargestellten Epoxyharze. Die Epoxyharze sind dem Fachmann bekannt und müssen hier nicht näher beschrieben werden.

Die Epoxydharze sollten vorzugsweise ein Diglycidylether auf der Grundlage eines Bis(4-hydroxyphenyl)-2,2-propans sein. Das bevorzugte Epoxyäquivalenzgewicht der Epoxyharze liegt im Bereich von 87 - 6000, vorzugsweise 120-1000.

Beispiele für geeignete Isocyanatverbindungen sind: Polyisocyanate wie Tetramethylendiisocyanat, Hexamethylendiisocyanat, 2,2,4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (=Isophorondiisocyanat, IPDI), Perhydro-2,4'- und/oder - 4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4'-Diisocyanato-4-methyl-diphenylmethan, Naphthylen-1,5-diisocyanat, Triphenylmethan-4,4',4"-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyante.

Besonders gut geeignet sind die bekannten Polyisocyante, die hauptsächlich bei der Herstellung von Lacken eingesetzt werden z.B. Biuret-, Isocyanurat- oder Urethangruppen-aufweisende Modifizierungsprodukte der obengenannten einfachen Polyisocyanate, insbesondere Tris-(6-Isocyanatohexyl)-biuret oder niedermolekulare, Urethangruppen-aufweisende Polyisocyanate, wie sie durch Umsetzung von im Überschuß eingesetztem IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisende Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen zugänglich sind. Als solche kommen insbesondere insgesamt mindestens zwei Aminogruppen und/oder Hydroxylgruppen aufweisende Verbindungen des Molekulargewichtsbereiches 300 bis 10 000, vorzugsweise 400 bis 6 000 zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Präpolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Beispiele für geeignete polyfunktionelle Acryloylverbindungen oder Methacryloylverbindungen beinhalten die (Meth)-acrylester von Di-, Tri- oder Poly-Hydroxyverbindungen, einschließlich Polyesterdiolen oder -Polyole und Polyetherdiole oder -Polyole; Addukte eines Hydroxylgruppenhaltigen (Meth)acrylesters eines Polyols zu einer mindestens bifunktionellen Isocyanatverbindung oder Epoxyverbindung; und Addukte von (Meth)acrylsäuren zu einer mindestens bifunktionellen Epoxyverbindung. Die Verbindungen, die hier in Betracht kommen, werden hier abgekürzt als Poly(meth)acrylolyverbindungen bezeichnet. Als Beispiele für geeignete (Meth)acrylester der Di-, Tri- oder Poly-Hydroxylverbindungen seien erwähnt Ethylenglykol, Propylenglykol, Diethylenglykol, Tetramethylendiol, Neopentylglykol, Hexamethylendiol, Cyclohexandiol, 4,4'-Dihydroxybenzophenon, Bis-(4-hydroxycyclohexan)methan, Glycerol, Trimethylolpropan und Pentaerythrit. Diese Ester enthalten vorzugsweise eine Hydroxylgruppe. Die Hydroxylgruppen enthaltenden (Meth)acrylester, aus denen das Addukt zu der mindestens bifunktionellen Isocyanatverbindung oder Epoxyverbindung gebildet werden kann, sind die (Meth)acrylester der Polyole, wie oben bereits erwähnt. Als Beispiele für eine mindestens bifunktionelle Isocyanat- oder Epoxyverbindung, geeignet zur Bildung des oben erwähnten Adduktes, seien jene Isocyanat- und Eporyverbindungen erwähnt, die bereits als Komponente des Adduktes einer Aminoverindung zu einer polyfunktionellen Isocyanat- oder Epoxyverbindung genannt wurden. Die Poly(meth)acryloylverbindung hat üblicherweise ein Äquivalenzgewicht von 85 - 5000, vorzugsweise 100 - 1000.

Die Aminogruppen der oben beschriebenen Polyamine sind zur Verwendung in dem erfindungsgemäßen Beschichtungsmittel blockiert durch ein Aldehyd oder Keton mit nicht mehr als 18 Kohlenstoffatomen, vorzugsweise 3 - 10 Kohlenstoffatomen. Beispiele für geeignete Blockierungsreagentien sind Aceton, Diethylketon, Methylisopropylketon, Diisobutylketon, Methyl-t-butylketon, Methylisobutylketon, Methylethylketon, Isobutyraldehyd, Hydroxybutyraldehyd, Pentanon, Cyclohexanon, Ethylamylketon, Hydroxycitronellal, Isophoron und Decanon. Vorzugsweise sollte ein aliphatisches oder cycloaliphatisches Keton mit 3 - 12 Kohlenstoffatomen benutzt werden. Das Blockieren der Aminogruppen ist bekannt und muß nicht näher beschrieben werden. Die blockierten Polyamine haben üblicherweise ein durchschnittliches Molekulargewicht von 250 - 4000, vorzugsweise 300 - 2000.

Die erfindungsgemäßen härtbaren flüssigen Beschichtungsmittel können gegebenenfalls ein Verdünnungsmittel wie übliche inerte organische Lösungsmittel enthalten. Beispielsweise seien hier genannt: halogenierte Kohlenwasserstoffe, Ether, wie Diethylether, 1,2-Dimethoxyethan, Tetrahydrofuran oder Dioxan; Ketone, wie beispielsweise Methylethylketon, Aceton, Cyclohexanon und ähnliche; Alkohole, wie Methanol, Äthanol, Propanol, Butanol und Benzylalkohol, (cyclo)aliphatische und/oder aromatische Lösemittel im Siedebereich von ca. 150 bis 180 °C (höhersiedende Mineralölfraktionen, wie $^{R}$Solvesso) oder Ester wie Butylacetat. Die Lösemittel können dabei einzeln oder im Gemisch eingesetzt werden.

Als übliche Zusatzstoffe, die eventuell in den erfindungsgemäßen flüssigen Beschichtungsmitteln vorhanden sein können, seien hier - in Abhängigkeit von dem jeweiligen Verwendungszweck - die üblichen Lackadditive wie Pigmente, Pigmentpasten, Antioxidantien, Verlaufs- bzw. Verdickungsmittel, Rheologiehilfsmittel, Entschäumer und/oder Netzmittel, Füllstoffe, Katalysatoren, zusätzliche Härter und zusätzliche härtbare Verbindungen udgl. genannt. Diese Additive können der Mischung gegebenenfalls erst unmittelbar vor der Verarbeitung zugegeben werden.

Die erfindungsgemäßen Mischungen können wegen ihrer günstigen Eigenschaften - vor allem der raschen Aushärtung auch bei tiefen Temperaturen - eine vielseitige technische Anwendung finden, z.B. zur Herstellung von Formkörpern (Gießharze) für den Werkzeugbau oder zur Herstellung von Überzügen und/oder Zwischenbeschichtungen auf vielerlei Substraten, z.B. auf solchen organischer oder anorganischer Natur, wie z.B. Holz, Textilien, Kunststoffe, Glas, Keramik, Baustoffe, insbesondere jedoch auf Metall. Weiterhin können die erfindungsgemäßen Mischungen als Bestandteile von Anstrichmitteln und Lacken zum Beschichten von Industriegegenständen, Haushaltsgeräten, wie z.B. Kühlgeräten, Waschmaschinen, Elektrogeräten, Fenstern, und Türen eingesetzt werden. Das Aufbringen kann beispielsweise durch Streichen, Sprühen, Tauchen , Spritzen udgl. erfolgen.

Ein bevorzugtes Anwendungsgebiet für die erfindungsgemäßen Mischungen sind die Lackzubereitungen.

Die Härtung der erfindungsgemäßen Mischungen läuft sehr rasch ab und erfolgt im allgemeinen bei -10 bis 150 °C vorzugsweise 0 bis 140 °C.

Die Härtungsreaktion läßt sich in einer Stufe durchführen, indem man beispielsweise mit äquivalenten Anteilen der Komponenten arbeitet. Die Topfzeit und die Eigenschaften des Produktes hängen daher von den Verfahrensbedingungen, d.h. von der Art und der Menge der Ausgangsstoffe, der Temperaturführung etc. ab. So läßt sich die Elastizität des vernetzten Produktes innerhalb eines Toleranzbereiches z.B. durch die Kettenlänge der eingesetzten Oligomere und/oder Polymere steuern. Obwohl die Härtung in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

Die zuvor beschriebenen Bindemittel besitzen überraschender Weise, obwohl sie in ihren Molekulargewichten und in ihren Funktionalitäten vergleichbar mit den Bindemitteln der EP 0 199 087 (Vergleichsbeispiel ist Beispiel G; $M_n$ 3400, EW 960, rechnerische Funktionalität: 5,9) sind, eine höhere Reaktivität, die sich in der kürzeren Gelzeit und in der besseren Lösungsmittelfestigkeit zeigt. Aus der Literatur (XIX. Fatipec-Kongress, 1988 Band III, S. 137 ff.) ist be kannt, daß Carbonsäuren die Vernetzungsreaktion beschleunigen; es ist deshalb überraschend, daß in dem vorliegenden Fall, obwohl diese Bindemittel Aminogruppen enthalten, die das Gesamtsystem basischer machen, eine beschleunigte Reaktion beobachtet wird.

Die erhaltenen Überzüge zeichnen sich daneben durch bessere Lösungsmittelbeständigkeiten (der Lackfilm ist früher nachbearbeitbar) und durch größere Elastizitäten aus (Erichsen-Tiefung).

**Herstellung der Bindemittelkomponente A:**

Beispiel A1:

110,6 Teile Diethanolamin und 121,8 Teile Limonen wurden in einen 4-1 Vierhalskolben, der mit Rührer, Thermometer, Rückflußkühler und Tropftrichter bestückt war, unter Stickstoff auf 110 °C erhitzt. Binnen 1 h wurden anschließend 987 Teile Beckopox EP 304 (Handelsname der Hoechst AG für einen Diglycidylether auf Basis Bisphenol A, Epoxidgehalt: ca. 1,8 %) zugegeben und solange nachgerührt bis der Epoxidgehalt auf <0,2 % gefallen war. Nach Zugabe von 700 Teilen Acetessigsäureethylester wurde 3 h lang zum Rückfluß erhitzt. Anschließend wurden binnen 3 h, anfangs bei Normaldruck dann im Vakuum, bis zu einer Sumpftemperatur von 145 °C die flüchtigen Bestandteile abdestilliert. Der Rückstand wurde mit Butylacetat auf einen Feststoffgehalt von 60 % verdünnt. Man erhält eine gelbbraune Harzlösung mit einem Acetoacetatgehalt von 11,7 %, einem Äquivalentgewicht von ca. 870 g/mol und einer Molmasse Mn von 3200. Die errechnete Funktionalität des Bindemittels ist 6,2. (Rechnerische Funktionalität = Quotient aus $M_n$ und Äquivalenzgewicht des Festharzes)

Beispiel A2:

55,5 Teile Xylol, 34,8 Teile Phthalsäureanhydrid, 24,8 Teile Adipinsäure, 1,34 Teile Trimethylolpropan und 49,4 Teile Cardura E 10 (Handelsname der SHELL für einen Versaticsäureglycidylester) wurden in einem 2-1 Vierhalskolben, der mit Rührer, Thermometer, Rückflußkühler und einem Tropftrichter bestückt war, für 2 h auf 120 °C erhitzt. Anschließend wurden 111,6 g Beckopox EP 140 (Handelsname der Hoechst AG für einen Diglycidylether auf Basis Bisphenol A, Epoxidgehalt: ca. 8,6 %) zugegeben. Bei 100-120 °C wurde dann solange nachgerührt bis eine Säurezahl <0,3 erreicht war.

Nach Abkühlung auf 100 °C wurden dann binnen 15 min 21 g Diethanolamin zugetropft; es wurde dann bei gleicher Temperatur nachgerührt bis der Epoxidgehalt auf <0,1 % gefallen war. Nach Zugabe von 104 Teilen Acetessigsäure-t-butylester wurde für 3 h zum Rückfluß erhitzt. Anschließend wurden binnen 3 h, anfangs bei Normaldruck dann im Vakuum, bis zu einer Sumpftemperatur von 145 °C die flüchtigen Bestandteile abdestilliert. Der Rückstand wurde mit Butylacetat auf einen Feststoffgehalt von 60 % verdünnt. Man erhält eine gelbbraune Harzlösung mit einem Acetoacetatgehalt von 12 %, einem Äquivalentgewicht von ca. 850 g/mol und einem Molekulargewicht $M_n$ von 2990. Die errechnete Funktionalität des Bindemittels ist 5,9.

Beispiel A3:

60 Teile Xylol, 35,5 Teile Phthalsäureanhydrid, 29,2 Teile Adipinsäure und 62,4 Teile Cardura E 10 (Handelsname der SHELL für einen Versaticsäureglycidylester) wurden in einem 2-1 Vierhalskolben, der mit Rührer, Thermometer, Rückflußkühler und einem Tropftrichter bestückt war, für 2 h auf 120 °C erhitzt. Anschließend wurden 111,6 g Beckopox EP 140 (Handelsname der Hoechst AG für einen Diglycidylether auf Basis Bisphenol A, Epoxidgehalt: ca. 8,6 %) zugegeben. Bei 100-120 °C wurde dann solange nachgerührt bis eine Säurezahl <0,3 erreicht war.

Nach Abkühlung auf 100 °C wurden dann binnen 15 min 21 g Diethanolamin zugetropft; es wurde dann bei gleicher Temperatur nachgerührt bis der Epoxidgehalt auf <0,1 % gefallen war. Nach Zugabe von 100 Teilen Acetessigsäure-t-butylester wurde für 3 h zum Rückfluß erhitzt. Anschließend wurden binnen 3 h, anfangs bei Normaldruck dann im Vakuum, bis zu einer Sumpftemperatur von 140 °C die flüchtigen Bestandteile abdestilliert. Der Rückstand wurde mit Butylacetat auf einen Feststoffgehalt von 60 % verdünnt. Man erhält eine gelbbraune Harzlösung mit einem Acetoacetatgehalt von 10,6 %, einem Äquivalentgewicht von ca. 960 und einem mittleren Molekulargewicht $M_n$ von 2480. Die errechnete Funktionalität des Bindemittels ist 3,9.

Beispiel A4:

300 Teile Beckopox VEM 2489 (Handelsbezeichnung der Hoechst AG für ein modifizierte Epoxidharz, Epoxidgehalt ca. 2,1 %) und 85 Teile Limonen wurden in einem 2-1 Vierhalskolben, der mit Rührer, Thermometer, Rückflußkühler und einem Tropftrichter bestückt war, unter Stickstoff auf 110 °C erhitzt.

Binnen 10 min wurden anschließend 42 Teile Diethanolamin zugegeben und solange nachgerührt bis der Epoxidgehalt auf <0,2 % gefallen war. Nach Zugabe von 284 Teilen Acetessigsäure-t-butylester wurde 3 h lang zum Rückfluß erhitzt. Anschließend wurden binnen 3 h, anfangs bei Normaldruck dann im Vakuum, bis zu einer Sumpftemperatur von 145 °C die flüchtigen Bestandteile abdestilliert. Der Rückstand wurde mit einem Gemisch Butylacetat/Methoxypropylacetat 4 : 1 auf einen Feststoffgehalt von 60 % verdünnt. Man erhält eine gelbbraune Harzlösung mit einem Acetoacetatgehalt von 14,7 %, einem Äquivalentgewicht von ca. 690 g/mol und einer Molmasse $M_n$ von 2490. Die errechnete Funktionalität des Bindemittels ist 6,1.

Beispiel A5:

270 Teile eines Epoxidharzes auf Basis Bisphenol A (Epoxidgehalt: 1,7 %) wurden in 120 Teilen Diglykoldimethylether nach EP 0 212 409 mit Kohlendioxyd in ein cyclisches Carbonatgruppen enthaltendes Epoxidharz überführt (Restepoxigehalt <0,1 %). Anschließend wurde die so erhaltene Harzlösung mit 70 Teilen Wasser und 0,3 Teilen Natriumcarbonat versetzt und auf 100 °C erhitzt. Es wurde solange nachgerührt, bis im IR-Spektrum keine Carbonylschwingung im Bereich von 1790 $cm^{-1}$ mehr sichtbar war. Nach Abdestillieren des Lösungsmittels im Wasserstrahlvakuum wurde der Rückstand mit 270 Teilen Acetessigsäureethylesters und 0,4 Teilen Dibutylzinndilaurat versetzt und 3 h lang zum Rückfluß erhitzt. Anschließend wurde binnen 3 h, anfangs bei Normaldruck dann im Vakuum, bis zu einer Sumpftemperatur von 145 °C die flüchtigen Bestandteile abdestilliert. Der Rückstand wurde mit 210 Teilen Butylacetat auf einen Feststoffgehalt von 60 % verdünnt. Man erhält eine braune Harzlösung mit einem Acetoacetatgehalt von 8,7 %, einem Äquivalentgewicht von ca. 1030 g/mol und einer Molmasse $M_n$ von 3200.

**Herstellung der Härterkomponente B:**

Beispiel B1:

206 Teile Diethylentriamin, 440 Teile Methylisobutylketon, 162 Teile Xylol und 2,6 Teile Ameisensäure wurden in einem 2-1 Vierhalskolben, der mit Rückflußkühler, Rührer und Wasserabscheider bestückt war, zum Rückfluß erhitzt. Nach Abscheiden von ca. 72 ml Wasser wurde auf 85 °C abgekühlt und binnen 30 min mit 397 Teilen Beckopox EP 304 (Handelsname der Hoechst AG für einen Diglycidylether auf Basis Bisphenol A, Epoxidgehalt: ca. 8,6 %) versetzt. Nach Erreichen eines Epoxidgehaltes von <0,5 % wurde mit 99 Teilen Xylol auf einen Feststoffgehalt von 75 % eingestellt. Man erhält eine hellgelbe Harzlösung, die eine Viskosität von 620 MPas und einen Amingehalt von 6,9 % besitzt.

**Herstellung der Grundierlacke:**

Entsprechend den Mengenverhältnissen in der folgenden Tabelle wurden die erfindungsgemäßen und ein Vergleichsbindemittel aus der EP 0 199 087 mit der Pigmentmischung, den Additiven und dem Lösungsmittel gemischt und vermahlen.

Bentone 10 % ist eine Aufschlämmung in Xylol; Additol XL 270 ist eine Handelsbezeichnung der Hoechst AG für ein handelsübliches Antiabsetzmittel.

Vergleichsbeispiel entspricht dem Beispiel G aus EP 0 199 087.

Verarbeitung:

100 Teile des obigen Lackes wurden mit der angegebenen Härtermenge versetzt und mit Butylacetat auf Spritzviskosität verdünnt. Der so erhaltene spritzfertige Lack wurde auf entfettete und gereinigte Prüfbleche appliziert; eine Hälfte der Prüfbleche wurde vor Applikation mit einem handelsüblichen Haftgrund vorbehandelt. Nach Trocknung bei Raumtemperatur wurde nach 4 h die Schleifbarkeit und die Beständigkeit gegen Benzin und Butylacetat geprüft.

**Anwendungstechnische Ausprüfung und Vergleich**

| Beispiele | 1 | 2 | 3 | 4 | Vergleichsbeispiel |
|---|---|---|---|---|---|
| Bindemittelkomponente | 125 | 125 | 125 | 125 | 125 |
| Pigmentmischung | 300 | 300 | 300 | 300 | 300 |
| Bentone (10% in Xylol) | 17,5 | 17,5 | 17,5 | 17,5 | 17,5 |
| Additol XL 270 | 3,5 | 3,5 | 3,5 | 3,5 | 3,5 |
| Butylacetat | 155 | 155 | 155 | 155 | 155 |
| Härter B1/ 100 Lack | 7 | 7,1 | 6,3 | 8,5 | 6,3 |

Ergebnisse:

| | | | | | |
|---|---|---|---|---|---|
| Gelzeit (min): | 60 | 65 | 65 | 60 | 120 |
| Schleifbarkeit: | 1 | 1-2 | 1 | 1 | 2 |
| Beständigkeit* gegen | | | | | |
| Benzin** n.4 h: | 0 | 1 | 0-1 | 0-1 | 3 |
| Butylacetat** n.4 h: | 1 | 1 | 1 | 1 | 4 |
| destilliertes Wasser*** n.10 Tg: | 1 | 1 | 1 | 1 | 1 |
| Natronlauge 10%*** n.10 Tg: | 1 | 1 | 1 | 1 | 1 |
| Erichsen Tiefung (mm) | | | | | |
| ohne | 7,5 | 6,8 | 7,2 | 7 | 2,5 |
| mit | 8,5 | 7,4 | 8 | 7,8 | 3 |

* visuelle Beurteilung, 0 = sehr gut
** Einwirkdauer 30 sec
*** Einwirkdauer 12 h

ohne: Der Lack wurde auf entfettetes und geschliffenes Blankblech gespritzt
mit: zusätzlich wurde das Blankblech mit einem handelsüblichen Haftgrund vorbehandelt.

**Patentansprüche**

1. Flüssiges Beschichtungsmittel auf der Basis eines Acetoacetat-Gruppen enthaltenden Polymers und eines Polyamins in Form des entsprechenden Aldimins oder Ketimins, dadurch gekennzeichnet, daß das Acetoacetat-Gruppen enthaltende Polymer durch Umsetzung eines Polyepoxids mit Wasser, einem Amin oder einer Hydroxycarbonsäure und anschließende Veresterung oder Umesterung mit Acetessigsäure erhalten wird.

2. Flüssiges Beschichtungsmittel nach Anspruch 1, dadurch gekennzeichnet, daß das Polyepoxid auf Bisphenol A und/oder Bisphenol F aufgebaut ist.

3. Flüssiges Beschichtungsmittel nach Anspruch 1, dadurch gekennzeichnet, daß das Polyepoxid neben Epoxidgruppen noch Dioxolan-2-on Gruppen enthält.

4. Flüssiges Beschichtungsmittel nach Anspruch 1, dadurch gekennzeichnet, daß das Polyepoxid mit Polyalkoholen, Polycarbonsäuren oder Polyaminen modifiziert ist.

5. Flüssiges Beschichtungsmittel nach Anspruch 1, dadurch gekennzeichnet, daß das Polyepoxid ein mit Polyalkoholen, Polycarbonsäuren oder Polyaminen modifiziertes Polyepoxid auf der Basis von Bisphenol A und/oder Bisphenol F ist.

6. Flüssiges Beschichtungsmittel nach Anspruch 1, dadurch gekennzeichnet, daß das Polyepoxid ein Molekulargewicht von 300 bis 20 000 hat.

7. Flüssiges Beschichtungsmittel nach Anspruch 1, dadurch gekennzeichnet, daß das Polyepoxid ein durch Umsetzung eines Polyepoxids auf der Basis von Bisphenol A und/oder Bisphenol F mit einem Dialkanolamin erhaltenes Polymer ist.

8. Flüssiges Beschichtungsmittel nach Anspruch 1, dadurch gekennzeichnet, daß das Polyamin, in Form des entsprechenden Aldimins oder Ketimins, ein Umsetzungsprodukt eines Polyamins mit einem Epoxid oder einem Polyisocyanat ist.

9. Flüssiges Beschichtungsmittel nach Anspruch 1, dadurch gekennzeichnet, daß das Polyamin in Form des entsprechenden Aldimins oder Ketimins, ein Umsetzungsprodukt eines Polyamins mit einem Polyepoxid auf der Basis von Bisphenol A und/oder Bisphenol F ist.

10. Flüssiges Beschichtungsmittel nach Anspruch 1, dadurch gekennzeichnet, daß das Polyamin, in Form des entsprechenden Aldimins oder Ketimins, eine Verbindung der Formel

$$H_2N\text{-}(R_2\text{-}NH)_n\text{-}R_1\text{-}NH_2$$

ist, wobei $R_1$ und $R_2$ gleich oder verschieden sind und $C_2$-$C_6$-Alkyl und n eine Zahl von 1 bis 16 bedeutet.

11. Verwendung der flüssigen Beschichtungsmittel nach Anspruch 1 zum Beschichten von Substraten.

12. Verwendung der flüssigen Beschichtungsmittel nach Anspruch 1 als Zwei-Komponenten Autoreparaturfüller oder als Zwei-Komponenten Grundiermaterial.

**Claims**

1. A liquid coating agent based on a polymer containing acetoacetate groups and a polyamine in the form of the corresponding aldimine or ketimine, wherein the polymer containing acetoacetate groups is obtained by reaction of a polyepoxide with water, an amine or a hydroxycarboxylic acid and subsequent esterification or transesterification with acetoacetic acid.

2. The liquid coating agent as claimed in claim 1, wherein said polyepoxide is built up on bisphenol A and/or bisphenol F.

3. The liquid coating agent as claimed in claim 1, wherein said polyepoxide also contains dioxolan-2-one groups, in addition to epoxide groups.

4. The liquid coating agent as claimed in claim 1, wherein said polyepoxide is modified with polyalcohols, polycarboxylic acids or polyamines.

5. The liquid coating agent as claimed in claim 1, wherein said polyepoxide is based on bisphenol A and/or bisphenol F and is modified with polyalcohols, polycarboxylic acids or polyamines.

6. The liquid coating agent as claimed in claim 1, wherein said polyepoxide has a molecular weight of 300 to 20,000.

7. The liquid coating agent as claimed in claim 1, wherein said polyepoxide is a polymer obtained by reaction of a polyepoxide based on bisphenol A and/or bisphenol F with a dialkanolamine.

8. The liquid coating agent as claimed in claim 1, wherein the polyamine, in the form of the corresponding aldimine or ketimine, is a reaction product of a polyamine with an epoxide or a polyisocyanate.

9. The liquid coating agent as claimed in claim 1, wherein the polyamine, in the form of the corresponding aldimine or ketimine, is a reaction product of a polyamine with a polyepoxide based on bisphenol A and/or bisphenol F.

10. The liquid coating agent as claimed in claim 1, wherein the polyamine, in the form of the corresponding aldimine or ketimine, is a compound of the formula

$$H_2N\text{-} (R_2\text{-}NH)_n\text{-}R_1\text{-}NH_2$$

in which $R_1$ and $R_2$ are identical or different and are $C_2$-$C_6$-alkyl and n is a number from 1 to 16.

11. The use of a liquid coating agent as claimed in claim 1 for coating substrates.

12. The use of a liquid coating agent as claimed in claim 1 as a two-component automobile repair filler or as a two-component priming material.

## Revendications

1. Agent d'enduit liquide à base d'un polymère contenant des groupes acétoacétates et d'une polyamine sous forme de l'aldimine ou de la cétimine correspondantes, caractérisé en ce qu'on obtient le polymère contenant les groupes acétoacétates par réaction d'un polyépoxyde avec l'eau, une amine ou un acide hydroxycarboxylique et ensuite par estérification ou transestérification avec l'acide acétoacétique.

2. Agent d'enduit liquide selon la revendication 1, caractérisé en ce que le polyépoxyde est à base de bisphénol A et/ou bisphénol F.

3. Agent d'enduit liquide selon la revendication 1, caractérisé en ce que le polyépoxyde contient outre les groupes époxy, encore des groupes dioxolane-2-one.

4. Agent d'enduit liquide selon la revendication 1, caractérisé en ce que le polyépoxyde est modifié par des polyalcools, acides polycarboxyliques ou polyamines.

5. Agent d'enduit liquide selon la revendication 1, caractérisé en ce que le polyépoxyde est un polyépoxyde à base de bisphénol A et/ou bisphénol F modifié par des polyalcools, acides polycarboxyliques ou polyamines.

6. Agent d'enduit liquide selon la revendication 1, caractérisé en ce que le polyépoxyde a un poids moléculaire de 300 à 20000.

7. Agent d'enduit liquide selon la revendication 1, caractérisé en ce que le polyépoxyde est un polymère obtenu par réaction d'un polyépoxyde à base de bisphénol A et/ou de bisphénol F avec une dialcanolamine.

8. Agent d'enduit liquide selon la revendication 1, caractérisé en ce que la polyamine, sous forme de l'aldimine ou de la cétimine correspondantes, est un produit de réaction d'une polyamine avec un époxyde ou un polyisocyanate.

9. Agent d'enduit liquide selon la revendication 1, caractérisé en ce que la polyamine sous forme de l'aldimine ou de la cétimine correspondantes, est un produit de réaction d'une polyamine avec un polyépoxyde à base de bisphénol A et/ou bisphénol F.

10. Agent d'enduit liquide selon la revendication 1, caractérisé en ce que la polyamine, sous forme de l'aldimine ou de la cétimine correspondantes, est un composé de formule

$$H_2N-(R_2-NH)_n-R_1-NH_2$$

$R_1$ et $R_2$ étant identiques ou différents, et représentant un alkyle en $C_2$-$C_6$ et n étant un nombre de 1 à 16.

11. Utilisation de l'agent d'enduit liquide selon la revendication 1 pour l'enduction de substrats.

12. Utilisation de l'agent d'enduit liquide selon la revendication 1 en tant que charge à deux composants pour la réparation d'automobiles ou en tant que matériau de base à deux composants.